Europäisches Patentamt

European Patent Office

Office européen des brevets

(19)

(11) **EP 0 722 102 A2**

(12) **EUROPÄISCHE PATENTANMELDUNG**

(43) Veröffentlichungstag:
17.07.1996 Patentblatt 1996/29

(51) Int. Cl.⁶: **G02B 6/30**

(21) Anmeldenummer: 95120337.1

(22) Anmeldetag: 21.12.1995

(84) Benannte Vertragsstaaten:
**CH DE ES FR GB IT LI SE**

(30) Priorität: **11.01.1995 DE 19500598**

(71) Anmelder: **ROBERT BOSCH GMBH**
**70442 Stuttgart (DE)**

(72) Erfinder:
• **Mueller-Fiedler, Roland, Dipl.-Phys.**
**D-71229 Leonberg (DE)**
• **Funk, Karsten, Dipl.-Ing.**
**D-70195 Stuttgart (DE)**
• **Laermer, Franz, Phys.**
**D-70437 Stuttgart (DE)**
• **Schaefer, Bernd-Josef, Phys.**
**D-72768 Reutlingen (DE)**

(54) **Anordnung zum Ankoppeln einer Lichtleitfaser an einen Lichtwellenleiter und Verfahren zur Herstellung einer Koppelstelle**

(57) Die Erfindung betrifft eine Anordnung zum Ankoppeln und ein Verfahren zur Herstellung einer Koppelstelle zwischen einer Lichtleitfaser und einem in einem Bauelement integrierten Lichtwellenleiter, wobei die Lichtleitfaser in einer naßchemisch geätzten, V-förmigen Justagestruktur des Bauelementes angeordnet ist und eine optische Achse der Lichtleitfaser mit einer optischen Achse des Lichtwellenleiters fluchtet.

Es ist vorgesehen, daß vor dem naßchemischen Ätzen in das Basissubstrat eine Vertiefung (50) eingebracht wird, die eine definierte Lage zu einer Maskierung (44) aufweist und eine Beeinflussung der Ätzung der Justagestruktur (26) auslöst, so daß die Justagestruktur (26) eine in axialer Richtung der Lichtleitfaser (12) verlaufende Vertiefung (34) derart aufweist, daß eine Stirnfläche (40) der Lichtleitfaser (12) zumindest im Bereich eines Faserkerns (16) mit einer Stirnfläche (42) des Lichtwellenleiters (14) über eine Stoßkopplung anliegt.

Fig. 1

EP 0 722 102 A2

## Beschreibung

Die Erfindung betrifft eine Anordnung zum Ankoppeln einer Lichtleitfaser an einen Lichtwellenleiter nach dem Oberbegriff des Anspruchs 1 und ein Verfahren zur Herstellung der Koppelstelle nach dem Oberbegriff des Anspruchs 5.

Stand der Technik

Es ist bekannt, in vielen Anwendungsgebieten, beispielsweise der Nachrichtentechnik, integriert-optische Bauelemente, wie Modulatoren, Richtkoppler, Schalter, Polarisatoren, Verteiler usw. einzusetzen. Diese weisen optische und/oder elektrooptische und/oder akustooptische Bauelemente auf, die über in dem Bauelement integrierte Lichtwellenleiter ansteuerbar beziehungsweise abrufbar sind. Zur Informationsübertragung werden die Lichtwellenleiter mit Lichtleitfasern, beispielsweise Glasfasern, gekoppelt.

Der Licht-Einkoppelwirkungsgrad bei der Kopplung von Glasfasern und integrierten Wellenleitern hängt sehr stark von dem Abstand der Endflächen einer lateralen Verschiebung sowie einer Winkelverkippung der optischen Achsen gegeneinander ab. Die Glasfaser besitzt bei der Ankopplung demnach fünf Freiheitsgrade, die unabhängig voneinander optimiert werden müssen: ein axialer Freiheitsgrad, zwei laterale Freiheitsgrade und zwei Winkelfreiheitsgrade. Bei den für Glasfasern typischen Feldverteilungen führt zum Beispiel ein lateraler Versatz von nur einem Mikrometer bereits zu einem Koppelverlust von etwa 0,3 dB.

Aus "Lightwave Technol." LT-1 (1983) 479, "Appl. Phys. Lett." 37 (1980) 351, "Quantum Electron." QE-22 (1986) 928 und "Appl. Opt." 17 (1978) 895 sind Verfahren bekannt, bei denen durch mikromechanische Strukturierung von Silicium Glasfasern in naßchemisch anisotrop geätzten V-Gräben gelagert und somit relativ zueinander mit hoher Genauigkeit positioniert werden können. Zur Herstellung der V-Gräben werden Siliciumwafer mit {100}-Oberflächenorientierung verwendet. Mit Hilfe rechteckförmiger Öffnungen in einer geeigneten Deckschicht aus Siliciumnitrid oder Siliciumdioxid, deren Kanten entlang der ⟨110⟩-Richtungen ausgerichtet sein müssen, lassen sich in alkalischen Ätzmedien, wie zum Beispiel Kaliumhydroxid (KOH), V-förmige Vertiefungen mit hoher Genauigkeit herstellen.

Die beschriebenen Verfahren haben gemeinsam, daß die Glasfasern und die integrierten Wellenleiter auf getrennten Substraten liegen, die gegeneinander justiert werden müssen. Ein selbstjustierendes Verfahren, bei dem sämtliche Freiheitsgrade eliminiert werden, ist nur bei Verwendung eines gemeinsamen Substrates möglich. Bei Anwendung von Silicium als Substrat wird die Siliciumoxid-Schicht, die als Pufferschicht für die integrierten Wellenleiter aus zum Beispiel Siliciumoxinitrid, dotiertem Siliciumoxid oder Siliciumnitrid dient, gleichzeitig als Ätzmaske für die naßchemische Strukturierung benutzt. Die horizontale Lage der Glasfasern und integrierten Wellenleiter ist somit durch die photolithographische Strukturierung der Oxidschicht definiert.

Die anisotrop geätzten V-Nuten werden allseitig von langsam ätzenden {111}-Ebenen begrenzt, die einen Winkel von 54,7° zur Waferoberfläche einschließen. Dieser Winkel führt dazu, daß zwar eine gute seitliche Führung der Glasfasern gewährleistet ist, die Endfläche der Faser jedoch nicht bis an die Endfläche eines integrierten Wellenleiters, der auf der Deckschicht liegt, herangeschoben werden kann. Somit ist eine Stoßkopplung, die für einen hohen Koppelwirkungsgrad erforderlich ist, nicht möglich. Zwischen beiden Wellenleitern besteht ein Mindestabstand z, der durch den Faserradius r und den Winkel von 54,7° der Grabenfläche durch folgende Gleichung beschrieben wird:

$$z = r/\tan 54{,}7°$$

Bei einem Faserradius von 62,6 $\mu$m ergibt sich somit ein Mindestabstand von etwa 45 $\mu$m. Für eine Kopplung mit hohem Wirkungsgrad sind jedoch wesentlich kleinere Abstände erforderlich.

Von Boyd und Sriram, (Appl. Opt." 17 (1978) 895, wurde vorgeschlagen, die Glasfaser mit einer um 54,7° geneigten Endfläche zu versehen, um somit den Faserkern bis auf Stoßkopplung an den integrierten Lichtwellenleiter heranzuschieben. Dieses Verfahren hat den Nachteil, daß eine aufwendige Endflächenbearbeitung der Faser notwendig ist und die Faser nur in einer bestimmten Lage in die Nut eingelegt werden darf. Bei der Kopplung besteht darüber hinaus die Gefahr, daß die beiden Endflächen aufeinander gleiten und die Faser daher aus dem Graben herausgeschoben wird. Eine zusätzliche Schwierigkeit ergibt sich aus der Notwendigkeit, nicht nur die Faser, sondern auch den integrierten Wellenleiter mit einer um 54,7° geneigten Endfläche zu versehen.

Weiterhin ist aus "Microsystem Technologies 91", VDE-Verlag (Berlin, 1991) 322 bekannt, daß sich die Form der durch anisotropes Naßätzen hergestellten Strukturen durch eine Laserbearbeitung der Waferoberfläche in charakteristischer Weise beeinflussen läßt. Wird in die 100-Oberfläche durch Laserbestrahlung eine Vertiefung eingebracht, so können sich die für unbestrahlte Oberflächen typischen V-Gräben nicht ausbilden. Voraussetzung hierfür ist, daß die durch den Laser verursachte Zerstörung der Waferoberfläche mindestens so tief in das Substratmaterial reicht, daß auch die 111-Ebenen, die sich ohne Laserbehandlung als ätzbegrenzende Flächen des Grabens ausbilden würden, durch das Laserlicht zerstört werden. Hierdurch bilden sich konvexe Ecken aus, die einem besonders schnellen Ätzangriff unterliegen. Die begrenzenden Flächen werden somit von denjenigen 111-Ebenen gebildet, die zu den zerstörten Ebenen parallel liegen und gerade nicht mehr von dem Laserabtrag betroffen sind.

Vorteile der Erfindung

Die erfindungsgemäße Anordnung zum Ankoppeln einer Lichtleitfaser mit den im Anspruch 1 genannten Merkmalen bietet demgegenüber den Vorteil, daß in einfacher Weise eine Ankopplung einer Lichtleitfaser an einen integrierten Lichtwellenleiter erfolgen kann, bei der eine selbstjustierende Kopplung mit einem hohen Koppelwirkungsgrad erzielbar ist. Dadurch, daß der Stirnflächenabschnitt des Basissubstrats innerhalb der Justagestruktur eine in axialer Richtung der Lichtleitfasern verlaufende Vertiefung aufweist, So daß eine Stirnfläche der Lichtleitfasern zumindest im Bereich eines Faserkerns an dem Lichtwellenleiter über eine Stoßkopplung anliegt, ist es vorteilhaft möglich, ohne aufwendige Bearbeitung der Endfläche der Lichtfaser die Lichtleitfasern mit hoher Genauigkeit in definierter Lage zu dem integrierten Lichtwellenleiter zu positionieren. Durch die in Richtung der Lichtleitfasern verlaufende axiale Vertiefung kann die Lichtleitfaser, ohne daß auf deren Positionierung in einer hochgenauen mikromechanischen Justagestruktur verzichtet werden muß, bis an den integrierten Lichtwellenleiter herangeführt werden. Hierdurch verringert sich der Koppelabstand zwischen dem Lichtwellenleiter und der Lichtleitfaser gegen Null, so daß ein hoher Koppelwirkungsgrad erreicht ist.

Ferner wird durch das erfindungsgemäße Verfahren zur Herstellung der Koppelstelle gemäß den im Anspruch 5 genannten Merkmalen erreicht, daß mittels bekannter und technologisch beherrschbarer Verfahrensschritte mit hoher Reproduzierbarkeit die Koppelstellen für die Lichtleitfaser und die integrierten Lichtwellenleiter geschaffen werden können. Dadurch, daß vor dem naßchemischen Ätzen in das Basissubstrat eine Vertiefung eingebracht wird, die eine definierte Lage zu der Maskierung aufweist und eine Beeinflussung der Ätzung der Justagestrukturen bewirkt, ist es vorteilhaft möglich, mittels diesem in eine Massenfertigung einbindbaren Fertigungsschritt gleichzeitig eine Vielzahl von hochpräzisen Koppelstellen zu fertigen, die einen hohen Koppelwirkungsgrad zwischen den integrierten Lichtwellenleitern und den anzukoppelnden Lichtleitfasern gestatten. Durch das Hinzufügen eines einzigen Verfahrenschrittes, nämlich den des Einbringens einer Vertiefung in einer definierten Lage, ist der nachfolgende Verfahrensschritt des naßchemischen Ätzens so zu beeinflussen, daß die Koppelstelle eine Stoßkopplung zwischen der Lichtleitfaser und dem Lichtwellenleiter gestattet. Weitere zusätzliche Verfahrensschritte, wie die Bearbeitung der Lichtleitfaser, das Anbringen zusätzlicher Justageelemente usw., entfallen hierdurch vollkommen.

Weitere vorteilhafte Ausgestaltungen ergeben sich aus den übrigen in den Unteransprüchen genannten Merkmalen.

Die Erfindung wird nachfolgend in einem Ausführungsbeispiel anhand der zugehörigen Zeichnungen näher erläutert. Es zeigen:

Figur 1    eine schematische Schnittdarstellung durch eine Koppelstelle eines Bauelements;

Figur 2 und 3    schematische Schnittdarstellungen durch den Anschlußbereich eines Bauelements vor einem Ätzprozeß;

Figur 4 und 5    schematische Schnittdarstellungen durch den Anschlußbereich eines Bauelements nach einem Ätzprozeß;

Figur 6    eine Draufsicht auf den Anschlußbereich eines Bauelements vor einem Ätzprozeß;

Figur 7 und 8    schematische Schnittdarstellungen durch die Koppelstelle.

Beschreibung des Ausführungsbeispiels

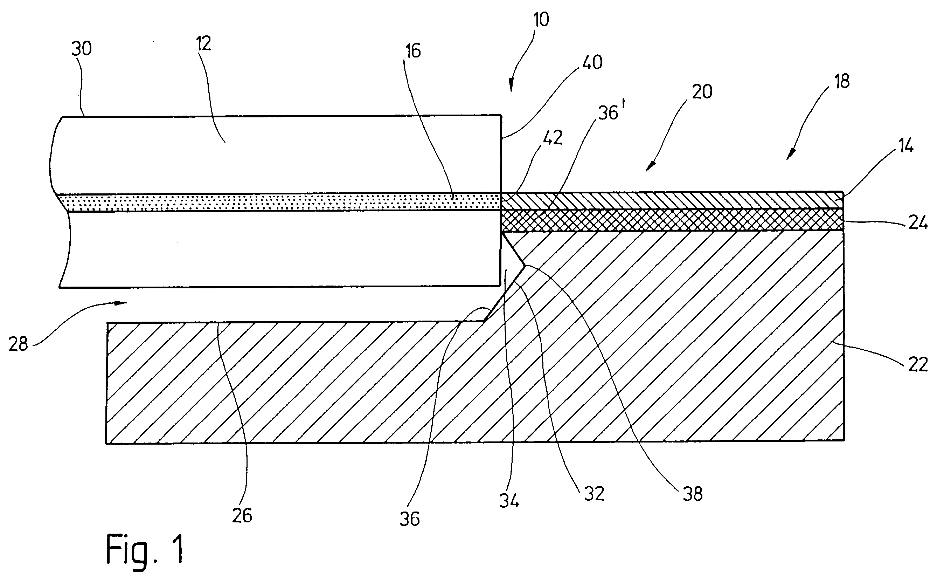

Figur 1 zeigt eine schematische Schnittdarstellung durch eine Koppelstelle 10 zwischen einer Lichtleitfaser 12 und einem Lichtwellenleiter 14. Die Lichtleitfaser 12 ist beispielsweise eine Glasfaser, die einen die optische Achse der Lichtleitfasern 12 bestimmenden Faserkern 16 besitzt. Die Lichtleitfaser 12 kommt oder führt beispielsweise zu einer Lichtquelle oder einen Lichtempfänger. Der Lichtwellenleiter 14 ist auf hier nicht näher zu betrachtende Weise in einem Bauelement 18 integriert, wobei hier lediglich ein Anschlußbereich 20 eines Lichtwellenleiters 14 des Bauelements 18 gezeigt ist. Das Bauelement 18 kann hier nicht dargestellte optische, elektrooptische, akustooptische usw. Bauelemente aufweisen. Diese Bauelemente sind über die Lichtwellenleiter 14 mit den Lichtleitfasern 12 zum Signalaustausch, das heißt, Signalsenden und/oder Signalempfangen, an der Koppelstelle 10 gekoppelt. Das Bauelement 18 weist ein Basissubstrat 22 auf, das vorzugsweise aus einkristallinem Silicium besteht. Im gezeigten Ausführungsbeispiel ist zwischen dem Basissubstrat 22 und der den Lichtwellenleiter 14 aufweisenden Schicht eine Zwischenschicht 24 angeordnet. Die Zwischenschicht 24 bildet eine Passivierung entsprechend einer - noch zu erläuternden - Maskierung für nicht zu bearbeitende Bereiche des Basissubstrats 22. Nach einem weiteren Ausführungsbeispiel kann die Zwischenschicht 24 auch oberhalb der die Lichtwellenleiter 14 aufweisenden Schicht angeordnet sein. Das Basissubstrat 22 weist für jede der Lichtleitfasern 12 eine Justagestruktur 26 auf. Die Justagestruktur 26 wird von in dem Basissubstrat 22 eingebrachten grabenförmigen Vertiefungen 28 gebildet. Die grabenförmigen Vertiefungen 28 werden durch einen allgemein bekannten naßchemischen Ätzprozeß erzeugt, so daß sich mittels eines Ätzmediums, wie beispielsweise Kaliumhydroxid, entlang von 111-Kristallebenen des Basissubstrats 22 ein Ätzfortschritt einstellt, so daß die V-förmig verlaufenden grabenförmigen Vertiefungen 28 entstehen. In den Vertiefungen 28 liegen die Lichtleitfasern 12 mit ihrer Mantelfläche 30 punktlinienförmig auf, so daß diese eine exakt ausgerichtete Position einnehmen. Die Höhenlage der Lichtleitfasern 12 kann durch eine Tiefe der Vertiefungen 28 eingestellt werden. An einer Stirnfläche 32 der Justagestruktur 26 ist eine in axialer Richtung der Lichtleitfasern 12 verlaufende Vertiefung 34 angeordnet. Die Vertiefung 34 wird hierbei von noch zu erläuternden 111-Kristallebenen 36 des Basissubstrats 22 gebildet. Ein Schnittpunkt 38 der 111-Kristallebenen 36 ist hierbei so gelegt, daß die Mantelfläche 30 der Lichtleitfasern 12 die untere 111-Kristallebene 36 nicht berührt. Dies gilt auch für den Fall, daß die Lichtleitfasern 12 mit ihrer Stirnfläche 40 bis an eine Stirnfläche 42 des Lichtwellenleiters 14 parallel herangeschoben ist, so daß sich zwischen den Stirnflächen 40 und 42 ein Abstand von annähernd Null ergibt. Zwischen dem Faserkern 16 und dem Lichtwellenleiter 14 kommt es somit zu einer stumpfen Stoßkopplung. Durch das Einlegen der Lichtleitfasern 12 in die V-förmige Justagestruktur 26 findet eine Selbstjustierung statt, das heißt, die Freiheitsgrade der Lichtleitfasern 12 bezüglich der Koppelstelle 10 sind eliminiert. Insgesamt kommt es zu einer hochpräzisen Ankopplung der Lichtleitfasern 12 an den Lichtwellenleiter 14, so daß sich ein hoher Koppelwirkungsgrad für ein die Koppelstelle 14 passierendes Lichtsignal ergibt. Es wird also deutlich, daß für die Ankopplung der Lichtleitfasern 12 an den Lichtwellenleiter 14 die Ausbildung der Justagestruktur 26 von entscheidender Bedeutung ist.

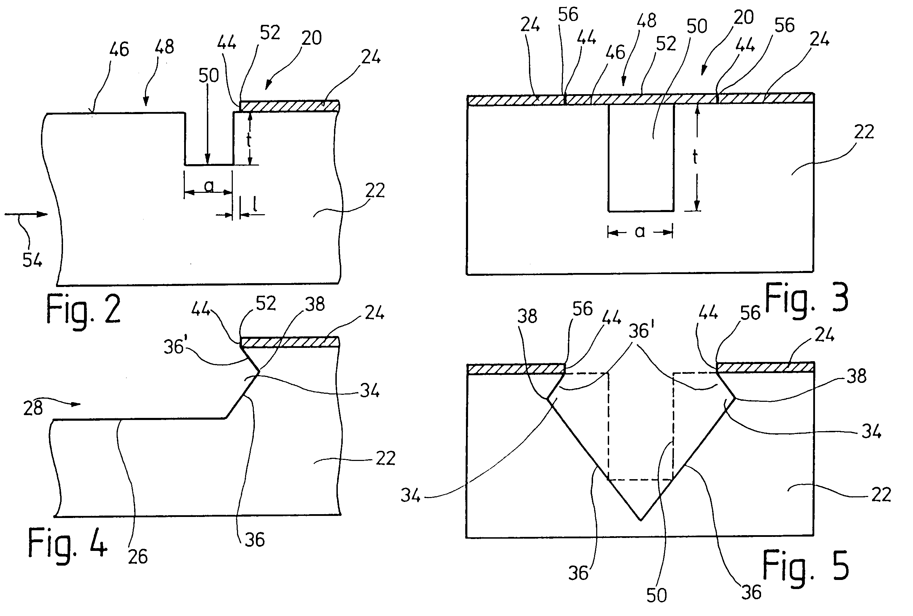

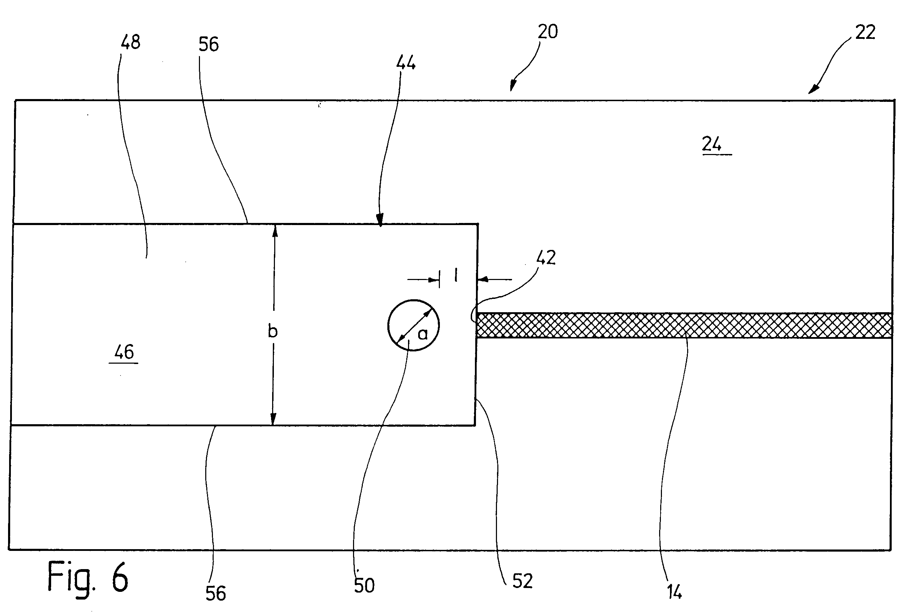

Anhand der Figuren 2 bis 8 soll die Herstellung der Justagestruktur 26 verdeutlicht werden. In der Figur 2 ist eine schematische Seitenansicht des Anschlußbereiches 20 vor Strukturierung der Justagestruktur 26 gezeigt. Das Basissubstrat 22 besitzt die Zwischenschicht 24, die beispielsweise aus Siliciumnitrid oder Siliciumdioxid besteht. Die Zwischenschicht 24 besitzt eine Maskierung 44, so daß auf einer Oberfläche 46 des Basissubstrats 22 ein nicht mit der Zwischenschicht 24 versehener Bereich 48 verbleibt (Figur 6). Innerhalb des Bereiches 48 ist in das Basissubstrat 22 eine Vertiefung 50 eingebracht. Die Vertiefung 50 ist beispielsweise kreisrund und besitzt einen Durchmesser a und eine Tiefe t. Das Einbringen der Vertiefung 50 kann beispielsweise mittels Laserbohren, Plasmaätzen oder anderen geeigneten Verfahren erfolgen. Die Vertiefung 50 besitzt weiterhin einen Abstand $\ell$ von einer Kante 52 der Maskierung 44. In der Figur 3 ist eine Vorderansicht des Anschlußbereiches 20 aus Richtung des in Figur 2 dargestellten Pfeils 54 gezeigt. Hierbei sind bewußt andere Größenverhältnisse gewählt, um zu verdeutlichen, daß der Durchmesser a und die Tiefe t der Vertiefung 50 - in noch zu erläuternder Weise - variabel gewählt sein können. Bei dem im Bereich der Vertiefung 50 gelegten Schnitt wird deutlich, daß die Vertiefung 50 symmetrisch, bezogen auf die beiden Seitenkanten 56 der Maskierung 44, eingebracht ist. Die in den Figuren 2 und 3 geschaffene Anordnung mit der Vertiefung 50 in dem Bereich 48 wird nunmehr einem anisotropen naßchemischen Ätzvorgang mit alkalischen Ätzmedien, wie beispielsweise Kaliumhydroxid, ausgesetzt. Die Oberfläche 46 des Basissubstrats 22 bildet hierbei eine 100-Kristallebene. Die Vertiefung 50 bildet eine Zerstörung der 100-Kristallebene, so daß sich die für eine unbehandelte Oberfläche 46 typischen V-Gräben nicht ausbilden können. Die Vertiefung 50 besitzt hierbei eine Tiefe t, die mindestens so weit in das Basissubstrat 22 hineinragt, daß die 111-Kristallebenen, die sich ohne das Einbringen der Vertiefung 50 als ätzbegrenzende Flächen des V-Grabens ausbilden würden, zerstört werden. Hierdurch bilden sich konvexe, parallel zur Oberfläche 46 verlaufende Vertiefungen aus, die einem besonders schnellen Ätzangriff unterliegen. Die begrenzenden Flächen werden somit von denjenigen 111-Kristallebenen 36 gebildet, die zu den zerstörten 111-Kristallebnen parallel liegen und gerade nicht mehr von dem Einbringen der Vertiefung 50 betroffen sind. Da andererseits das Basissubstrat 22 unterhalb der Zwischenschicht 24 vor dem Ätzangriff geschützt ist, können sich die 111-Kristallebenen 36 nicht bis zur Oberfläche 46 erstrecken. Unterhalb der Zwischenschicht 24 wird die geätzte Justagestruktur 26 von einer Schar weiterer 111-Kristallebenen 36' gebildet, die mit den 111-Kristallebenen 36 einen Winkel von 109,4° einschließen, und die von der Unterkante der Kante 52 der Maskierung 44 ausgehen. Die 111-Kristallebenen 36 und 36' schneiden sich in dem in Figur 1 gezeigten Schnittpunkt 38, so daß es zur Ausbildung der Vertiefung 34 nicht nur unterhalb der Kante 52 der Zwischenschicht 24, sondern auch unterhalb der seitlichen Kanten 56 im Bereich der zuvor eingebrachten, hier nur noch gestrichelt angedeuteten Vertiefung 50 ausgebildet. Die Lage der Schnittpunkte 38 der 111-Kristallebenen 36 beziehungsweise 36' hängt hierbei ausschließlich von der Tiefe t und dem Durchmesser a der Vertiefung 50 ab.

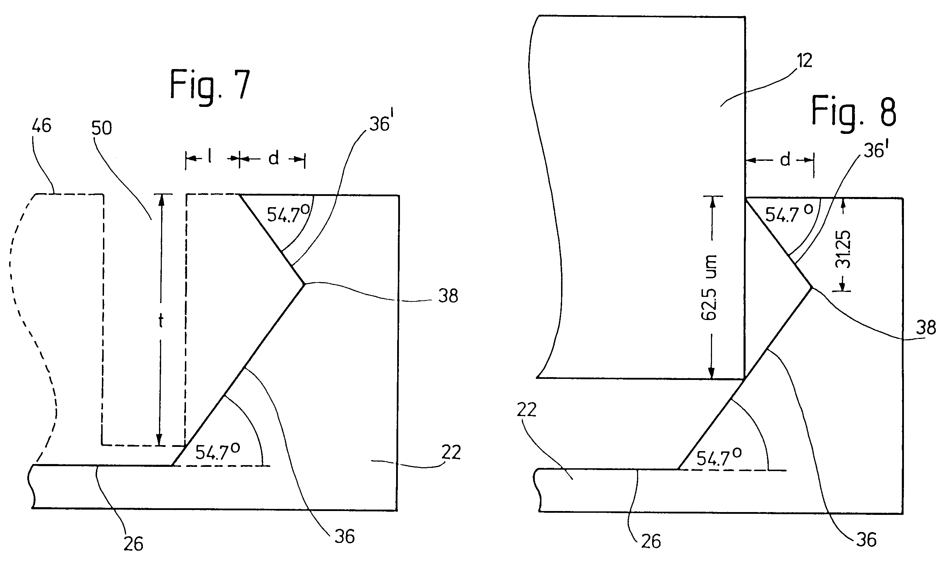

In der Figur 6 ist eine Draufsicht auf den Anschlußbereich 20 gezeigt. Gleiche Teile wie in den Figuren 2 bis 5 sind mit gleichen Bezugszeichen versehen und hier nicht nochmals erläutert. Die Darstellung ist in dem Zustand gezeigt, in dem die Zwischenschicht 24 auf das Basissubstrat 22 aufgebracht ist und diese die Maskierung 44 ausbildet. Die Maskierung 44 bildet den Bereich 48 aus, innerhalb dem die Oberfläche 46 des Basissubstrats 12 nach oben sichtbar und damit für einen naßchemischen Ätzangriff freigelegt ist. Die Strukturierung der Maskierung 44 kann beispielsweise durch einen, hier nicht weiter zu betrachtenden photolithographischen Verfahrensschritt erfolgen. Die Maskierung 44 besitzt hierbei eine Breite b, wobei, wie bereits erwähnt, die Vertiefung 50 symmetrisch zur Breite b eingebracht ist. In der Draufsicht ist weiterhin der Lichtwellenleiter 14 zu erkennen, der in das Bauelement 18 integriert ist. Der Lichtwellenleiter 14 ist hierbei entweder in einer über der Zwischenschicht 24 oder einer unter der Zwischenschicht 24 liegenden, lichtleitenden Schicht angeordnet. Die Herstellung des Lichtwellenleiters 14 erfolgt in hier nicht näher zu betrachtender Weise, beispielsweise durch Dotierung bestimmter Bereiche der nicht dargestellten lichtleitenden Schicht, so daß im Bereich der Dotierung eine Änderung des Brechungsindex erfolgt, so daß es zur Ausbildung des Lichtwellenleiters 14 kommt. Der Lichtwellenleiter 14 fluchtet mit seiner Stirnfläche 42 mit der Kante 52 der Maskierung 44. Die Vertiefung 50 ist in dem Abstand $\ell$ von der Kante 52 angeordnet und ist symmetrisch zwischen den Kanten 56 der Maskierung 44 angeordnet, so daß diese mit der Stirnfläche 42 des Lichtwellenleiters 14 fluchtet. Im Ergebnis des anhand der Figuren 2 bis 6 erläuterten naßchemischen Ätzvorganges entsteht die Justagestruktur 26, wie sie in Figur 1 gezeigt ist. Die Lichtleitfaser 12 wird in die Justagestruktur 26 eingelegt und mit ihrer optischen Achse, das heißt mit ihrem Faserkern 16, auf Stoß an die Stirnfläche 42 des Lichtwellenleiters 14 angekoppelt. Damit die Lichtleitfaser 12 mit ihrer Mantelfläche 30 nicht an der unteren 111-Kristallebene 36 anstößt, muß der Schnittpunkt 38 der 111-Kristallebenen 36 beziehungsweise 36' einen Mindestabstand d von der Stirnfläche 40 der Lichtleitfasern 12 besitzen. Wie in den in den Figuren 7 und 8 gezeigten Teilansichten der Koppelstelle 10, wobei wiederum gleiche Teile wie in den vorhergehenden Figuren mit gleichen Bezugszeichen versehen sind, deutlich wird, besteht zwischen der Tiefe t der Vertiefung 50, dem Abstand $\ell$ der Vertiefung 50 von der Kante 52 der Maskierung 44 und dem Abstand d des Schnittpunktes 38 folgende Beziehung:

$$\frac{t}{\ell + 2 \cdot d} = \tan 54{,}7° \tag{1}$$

$$d = \frac{t}{2 \cdot \tan 54{,}7°} - \frac{\ell}{2} \tag{2}$$

Andererseits gilt nach der Figur 8 bei einem beispielhaft angenommenen Radius der Lichtleitfaser 12 von 62,5 µm für den minimalen Abstand d:

$$d_{min} = \frac{31{,}25\mu m}{\tan 54{,}7°} = 22{,}2\mu m \tag{3}$$

Die Dicke des lichtleitenden Schichtaufbaus, das heißt, die den Lichtwellenleiter 14 aufnehmende Schicht wurde hierbei nicht berücksichtigt. Sie führt zu einer höheren Lage der optischen Achse, was dazu führt, daß der minimale Abstand d etwas kleiner werden kann. Der Wert von 22,2 µm ist also ein unterer Grenzwert, dessen Einhaltung immer gewährleistet, daß die Lichtleitfaser 12 mit ihrer Mantelfläche 30 nicht auf der 111-Kristallebene 36 aufliegt.

Eine zusätzliche Zerstörung der Seitenwände, wie in Figur 5 dargestellt, führt zur Verbreiterung der Justagestruktur 26, so daß die Lichtleitfaser 12 in diesem Bereich nicht mehr geführt wird, sondern mit ihrem dem Lichtwellenleiter zugewandten Ende frei hängt. Es ist daher von Vorteil, wenn nur die Stirnfläche der Justagestruktur 26, nicht jedoch die Seitenwände, durch das Einbringen der Vertiefung 50 und das anschließende Ätzen umgeklappt werden. Ein Zahlenbeispiel verdeutlicht die Größenordnungen:

Bei einem Abstand $\ell$ des Laserloches von der Maskenkante 52 von 20 µm und einem Abstand $d = d_{min}$ von 22,2 µm muß die Vertiefung nach Gleichung (1) t=91 µm tief sein, um ein ausreichendes Rückweichen der 111-Stirnfläche zu gewährleisten. Die Tiefe des V-Grabens (Justagestruktur 26) T ist mit seiner Breite b verknüpft durch:

$$b = 2 \cdot \frac{T}{\tan 54{,}7°} \tag{4}$$

Soll die optische Achse, also der Faserkern 16, in Höhe der Waferoberfläche liegen, so muß bei einem Faserdurchmesser D von 125 µm die Grabenbreite b= 153 µm betragen:

$$b = \frac{D}{\sin 54{,}7°} \tag{5}$$

Dies entspricht einer Grabentiefe T von 108 µm. Die Vertiefung 50 muß also mit 91 µm um 17 µm weniger tief reichen als die Grabenspitze. Damit die 111-Seitenwände hierbei nicht zerstört werden, darf die Vertiefung einen maximalen Durchmesser von a= 24 µm besitzen:

$$\frac{a}{2} = 17 \mu m \cdot \tan 35{,}3° \tag{6}$$

Eine Verringerung des Abstandes d führt nach (2) zu einer Verringerung der Tiefe t und somit zu einer größeren zulässigen Breite a.

Die Erfindung beschränkt sich nicht auf das dargestellte Ausführungsbeispiel. So ist es weiterhin möglich, nachdem die Justagestruktur 26 ohne Vertiefung 50 eingebracht wurde, mit einer entsprechend ausgerichteten Laserbehandlung die Vertiefung 34 zu strukturieren, so daß die Lichtleitfaser 12 auf Stoßkopplung an dem Lichtwellenleiter 14 angekoppelt werden kann. Weiterhin bleibt es einer verfahrenstechnischen Optimierung vorbehalten, ob die den Lichtwellenleiter 14 aufnehmende Schicht vor oder nach Erstellung der Justagestruktur 26 erfolgt. Bei dem in dem Ausführungsbeispiel gezeigten Beispiel wurde immer vom Ankoppeln einer Lichtleitfaser 12 an einen Lichtwellenleiter 14 ausgegangen. Es ist jedoch selbstverständlich auch möglich, gleichzeitig auf einem Bauelement 18 eine Vielzahl, beispielsweise parallel nebeneinander angeordneter Justagestrukturen 26 mit der erfindungsgemäß angeordneten Vertiefung 34 zu strukturieren. Dies erlaubt das gleichzeitige Anschließen einer Vielzahl von Lichtleitfasern 12 eines Faserbündels.

**Patentansprüche**

1. Anordnung zum Ankoppeln einer Lichtleitfaser an einen in einem Bauelement integrierten Lichtwellenleiter, wobei die Lichtleitfaser in einer naßchemisch geätzten, V-förmigen Justagestruktur des Bauelements eingelegt ist, die in einem Basissubstrat des Bauelements derart angeordnet ist, daß die optische Achse der Lichtleitfaser mit der optischen Achse des Lichtwellenleiters fluchtet, dadurch gekennzeichnet, daß die Justagestruktur (26) eine in axialer Richtung der Lichtleitfaser (12) verlaufende Vertiefung (34) aufweist, so daß der Lichtwellenleiter (14) bis zur Stirnfläche (42) auf dem Basissubstrat (22) aufliegt, und eine Stirnfläche (40) der Lichtleitfaser (12) zumindest im Bereich eines Faserkerns (16) an eine Stirnfläche (42) des Lichtwellenleiters (14) über eine Stoßkopplung anliegt.

2. Anordnung nach Anspruch 1, dadurch gekennzeichnet, daß die Vertiefung (34) von einer Schar naßchemisch geätzter 111-Kristallebenen (36, 36') des Basissubstrats (22) gebildet wird.

3. Anordnung nach einem der vorhergehenden Ansprüche, **dadurch gekennzeichnet**, daß ein Abstand (d) eines Schnittpunktes (38) der 111-Kristallebenen (36, 36') von der Stirnfläche (42) des Lichtwellenleiters (14) mindestens dem halben Radius (r) der Lichtleitfaser (12) dividiert durch den Tangens der Winkelstellung der 111-Kristallebenen (36, 36') zur Oberfläche (46) des Basissubstrats (22) beträgt.

4. Verfahren zur Herstellung einer Koppelstelle zwischen einer Lichtleitfaser und einem in einem optischen Bauelement integrierten Lichtwellenleiter, wobei eine V-förmige Justagestruktur für die Lichtleitfaser naßchemisch in ein Basissubstrat des Bauelements eingeätzt wird, wobei das Basissubstrat eine die Justagestruktur ergebende Maskierung erhält, insbesondere nach den Ansprüchen 1 bis 3, **dadurch gekennzeichnet**, daß vor dem naßchemischen Ätzen in das Basissubstrat (22) eine Vertiefung (50) eingebracht wird, die eine definierte Lage zu der Maskierung (44) aufweist und eine Beeinflussung der naßchemischen Ätzung der Justagestruktur (26) auslöst.

5. Verfahren nach Anspruch 4, **dadurch gekennzeichnet**, daß die Vertiefung (50) in einem vom Radius (r) der anzukoppelnden Lichtleitfaser (12) abhängigen Abstand ($\ell$) zu einer Stirnkante (52) der Maskierung (44) eingebracht wird.

6. Verfahren nach einem der vorhergehenden Ansprüche, **dadurch gekennzeichnet**, daß die Vertiefung (50) mit einer Tiefe (t) und einem Durchmesser (a) eingebracht wird, so daß eine Beeinflussung der von 111-Kristallebenen (36, 36') gebildeten seitlichen Begrenzungsflächen der Justagestruktur (26) unterbleibt und ausschließlich eine Strukturierung von stirnseitigen 111-Kristallebenen (36, 36') gebildete Vertiefung (34) der Justagestruktur (26) erfolgt.

7. Verfahren nach einem der vorhergehenden Ansprüche, **dadurch gekennzeichnet**, daß die Vertiefung (50) durch eine Laserbelichtung eingebracht wird.

8. Verfahren nach einem der Ansprüche 4 bis 6, **dadurch gekennzeichnet**, daß die Vertiefung (50) durch einen Plasmaätzprozeß eingebracht wird.

Fig. 1

EP 0 722 102 A2

Fig. 2

Fig. 3

Fig. 4

Fig. 5

EP 0 722 102 A2

Fig. 6

EP 0 722 102 A2

Fig. 8

Fig. 7